# EUROPEAN PATENT SPECIFICATION

(11) **EP 3 486 748 B1**
(45) Date of publication and mention of the grant of the patent: **01.12.2021**
(21) Application number: 17201867.3
(22) Date of filing: 15.11.2017
(51) Int. Cl.: G06F 3/01

(54) **APPARATUS FOR PROVIDING A TACTILE OUTPUT**
VORRICHTUNG ZUR BEREITSTELLUNG EINER TAKTILEN AUSGABE
APPAREIL POUR FOURNIR UN SIGNAL TACTILE

(43) Date of publication of application: 22.05.2019
(73) Proprietor: Nokia Technologies Oy, 02610 Espoo (FI)
(72) Inventor: Radivojevic, Zoran, Cambridge, Cambridgeshire CB3 0FA (GB); Bruna, Matteo, Cambridge, Cambridgeshire CB3 0FA (GB); Zarra, Salvatore, Cambridge, Cambridgeshire CB3 0FA (GB); Sassi, Ugo, Cambridge, Cambridgeshire CB3 0FA (GB)
(74) Representative: Swindell & Pearson Limited

(56) References cited:
- US-A1- 2006 022 952
- US-A1- 2013 328 447
- US-A1- 2014 232 646
- US-A1- 2014 327 531
- US-A1- 2017 153 703

## Description

### TECHNOLOGICAL FIELD

Examples of the disclosure relate to an apparatus for providing a tactile output. In particular, they relate to an apparatus for providing a tactile output in a wearable device.

### BACKGROUND

Apparatus for providing tactile outputs to a user may be arranged to provide outputs which a user can perceive via their sense of touch. Such apparatus may be provided within a wearable electronic device which can be positioned in close proximity to the user's skin. Such apparatus may be arranged to vibrate and/or deform so that the user can sense these vibrations and/or deformations.

US 2017/153703 discloses a piezoelectric haptic feedback structure which may be used in an electronic device.

The structure comprises a thin metal support disc rigidly mounted at its perimeter within an annular retention plate. A disc-shaped piezo-electric actuator is mounted on the underside of the metal support disc. A force communicating assembly is connected to the upper surface of the disc by a dimple.

When the piezoelectric actuator is energized, the disc is caused to bow in an upward or downward direction.

(US 2013/328447) discloses the use of an *"electro-active polymer"* as an actuator. The polymer may be applied to a touch panel with a flexible display.

When the electro-active polymer is energized, deflection is caused, in a manner similar to US 2017/153703.

US 2014/327531 discloses the use of a composite piezoelectric actuator layer into a touch screen to provide haptic feedback. The composite layer can also be applied to other devices such as keyboards, keypads and computer mice.

A composite piezoelectric assembly comprising the piezoelectric actuator layer may be in the form of a tape and may have adhesive on one or both sides [0028]. The tape may also be used as a sealant.

The piezo electric layer comprises an array of piezoelectric rods embedded in a polymer matrix. Applying electrical stimulation causes the rods to expand or contract longitudinally. This causes a component coupled to piezoelectric assembly (for example, a touch screen) to move with an in-and-out motion. Whilst this occurs, the length and width of the piezoelectric rods remains substantially the same.

### BRIEF SUMMARY

The present invention provides an apparatus as defined in claim 1.

The dependent claims define further advantageous embodiments.

### BRIEF DESCRIPTION

For a better understanding of various examples that are useful for understanding the detailed description, reference will now be made by way of example only to the accompanying drawings in which:
Figs. 1A to 1C illustrate an apparatus;
Fig. 2 illustrates an apparatus;
Fig. 3 illustrates an apparatus;
Figs. 4A and 4B illustrate an apparatus;
Figs. 5A and 5B illustrate an apparatus; and
Fig. 6 illustrates an example wearable device comprising an apparatus.

### DETAILED DESCRIPTION

The figures and description relate to an apparatus 1 which can be arranged to provide a tactile output to a user. The apparatus 1 may be provided within a wearable electronic device. In some examples the apparatus could be arranged to provide an output indicative of a bio signal or other biometric parameter of the user. For instance, the apparatus 1 could be arranged to provide a tactile output indicative of a user's heart rate.

The example apparatus 1 are arranged to transfer multi-directional motion of an actuator 3 into a displacement or deformation in a given direction. The given direction could be perpendicular, or substantially perpendicular, to the surface of the apparatus 1 so that the energy used by the actuator 3 is efficiently used for displacement or deformation which can be detected by the user.

The Figures illustrate example apparatus 1 comprising: an actuator 3 arranged to move in a first direction and a second direction in response to an electrical input signal; at least one member 5, coupled to the actuator 3 and arranged to extend towards the second direction; wherein the actuator 3 is arranged relative to the at least one member 5 so that displacement of the at least one member 5 caused by movement of the actuator 3 in the first direction is restricted and displacement of the at least one member 5 caused by movement of the actuator 3 in the second direction, provides a tactile output.

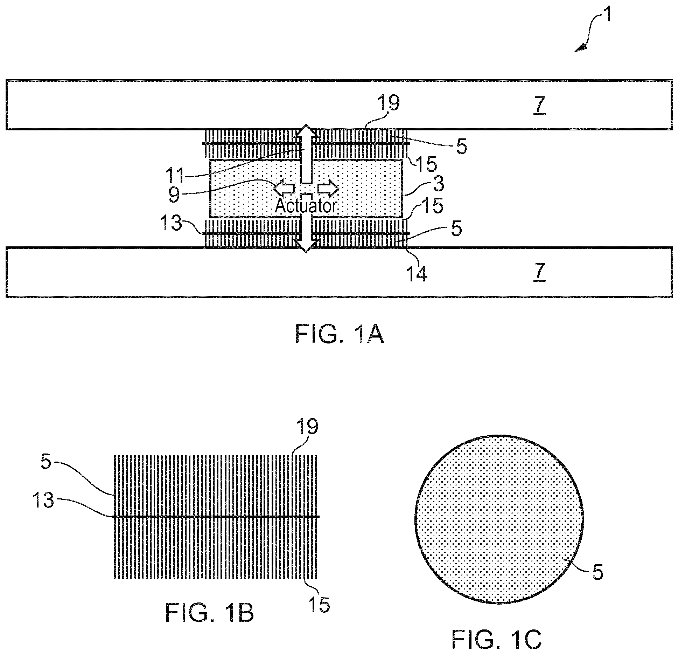

Figs. 1A to 1C illustrate a first example apparatus 1. The example apparatus 1 comprises an actuator 3, a plurality of members 5 and a deformable substrate 7. Fig. 1A illustrates a cross section of the example apparatus 1, Fig. 1B illustrates a plurality of members 5 which are provided within the apparatus 1 and Fig. 1C illustrates a plan view of the plurality of members 5.

The actuator 3 may comprise any means which are arranged to move in response to an electrical input signal. The actuator 3 may be arranged so that the movement of the actuator 3 corresponds to the input electrical signal. For example, the speed and/or amplitude of the movement of the actuator 3 may be controlled by the electrical input signal. Other parameters of the movement of the actuator 3 may be controlled by the electrical input signal in other examples of the disclosure.

The actuator 3 is positioned within the apparatus 1 so that the actuator 3 can move in both a first direction and a second direction. In Fig. 1A the first direction is indicated by the arrow 9 and the second direction is indicated by the arrow 11. The first direction and the second direction are orthogonal to each other. The movement of the actuator 3 may comprise linear motion, rotational motion or a combination of both linear and rotational motion. The movement of the actuator 3 may comprise components in both the first direction and the second direction.

The actuator 3 may comprise any suitable type of actuator 3. In some examples the actuator 3 may comprise an eccentric rotating mass (ERM) actuator, a linear resonant actuator (LRA) or any other suitable type of actuator. The actuator 3 may be arranged to be driven by a small voltage. The small voltage could be a voltage which would not be harmful to a user. The small voltage could be 5V or below. This may ensure that the actuator 3 is suitable for use in a wearable electronic device.

The apparatus 1 also comprises a plurality of members 5. In the example of Figs. 1A to 1C a plurality of members 5 are provided. Fig. 1B shows a side view of the plurality of members 5 and Fig. 1C shows a plan view of the plurality of members.

The plurality of members 5 are positioned adjacent to the actuator 3. The plurality of members 5 are positioned adjacent to the actuator 3 in the second direction. In the example of Figs. 1A to 1C the plurality of members 5 are provided overlaying the actuator 3 and the also underneath the actuator 3.

The plurality of members 5 comprise a plurality of elongate members. The elongate members may be elongate so that the length of the member is several times larger than the width of the member. As shown in Fig. 1C the plurality of members are arranged in an array. The array comprises a plurality of rows and columns with members 5 provided along the rows and columns. In the example of Fig. 1C the array is a circular array. Other shapes of the array could be provided in other examples of the disclosure.

The plurality of members are aligned to be parallel with each other so that the lengths of the members 5 extend in the same direction or substantially the same direction. In the example of Figs. 1A to 1C the each of the plurality of members extend toward the second direction.

The plurality of members 5 may be rigid or at least partially rigid. The plurality of members may be sufficiently rigid so that when a force in the second direction is applied by the actuator 3 this causes displacement of the member 5 rather than deformation of the member 5.

In the example of Figs. 1A to 1C a coupling member 13 is provided. The coupling member 13 may comprise any means which may enable the plurality of members 5 to be coupled together. The coupling member 11 may be arranged to ensure that the plurality of members 5 remain aligned in a parallel or substantially parallel direction. In some examples the coupling member 13 may act to increase the rigidity of the plurality of members 5 and reduce deformation when a force is applied in a second direction.

The coupling member 13 may be a thin polymeric layer. The coupling member 13 may be arranged to allow movement of the members 5 relative to each other in the second direction. This may allow different members 5 in the array to have different displacements in the second direction. The coupling member 13 may be arranged to restrict movement of the members 5 relative to each other in the first direction That is, the coupling member 13 may prevent the members from becoming spaced from each other in the first direction.

In some examples the coupling member 13 may comprise a plurality of holes. One or members 5 may be positioned within each hole so that the members 5 can move relative to the coupling member 13 and/or each other in the second direction but the edges of the holes may restrict movement of the members 5 in the second direction.

In some examples the coupling member 13 could comprise a rubber film, silicone deformable layer or other suitable member. In the example of Figs. 1A to 1C the rubber film extends over a surface which extends orthogonal, or substantially orthogonal to, the second direction of movement of the actuator 3. The rubber film extends over a surface which extends parallel, or substantially parallel to, the first direction of movement of the actuator 3. In the example of Figs. 1A to 1C the rubber film is provided at a midpoint along the length of the plurality of members 5. In other examples the rubber film could be provided at a different position.

The apparatus 1 also comprises a deformable substrate 7. The deformable substrate may be flexible and/or stretchable. The deformable substrate 7 could comprise any suitable fabric or elastomeric material. The deformable substrate 7 may be deformable enough so that it will deform when one or more of the members 5 are moved in the second direction. This deformation may provide a tactile output which can be detected by a user when the device is in contact with the user's skin.

In some examples the deformable substrate 7 could provide the outer surface of a wearable electronic device. For instance the deformable substrate 7 could be provided as the outer surface in an item of clothing or in a wearable pendant or necklace. In use, the deformable substrate 7 could be positioned adjacent to the user's skin so that the user can detect the deformation of the deformable substrate 7 using their sense of touch. The deformable substrate 7 may be arranged so that the user can detect the displacement of one or more members 5 through the deformable substrate 7.

In the example of Figs. 1A to 1C a first deformable substrate 7 is provided overlaying a first plurality of members 5 and a second deformable substrate 7 is provided underneath the second plurality of members 5.

The deformable substrates 7 may comprise any suitable material. In some examples the deformable substrates 7 may comprise a fabric or an elastomeric material.

In the example of Fig.1 the apparatus 1 comprises two deformable substrates 7. In other examples the apparatus 1 could comprise only one deformable substrate 7. In other examples the apparatus 1 could be arranged without the deformable substrates 7. In such examples the tactile output detected by the user could be the displacement of one or more members 5.

Each of the plurality of members 5 has a first end 15 and a second end 19. The first ends 15 are unattached. The first ends 15 are positioned adjacent to the actuator 3. The first ends 15 may be touching, or in close proximity, to the actuator 3. The second ends 19 are coupled to the deformable substrate 7. The second ends 19 may be coupled to the deformable substrate 7 so that if the seconds ends 19 of the members 5 are moved this causes the deformable substrate 7 to be moved. The second ends 19 may be coupled to the deformable substrate 7 via any suitable means.

When the actuator 3 moves in the first direction this movement does not cause a force to be applied to the plurality of members 5. As the first ends 15 of the members 5 are unattached this allows movement of the actuator 3 in the first direction without causing a movement of the members 5. This restricts the displacements of the plurality of members 5 when the actuator 3 moves in the first direction. In some examples movement of the actuator 3 in the first direction could cause a small displacement of the first ends 15 of the members 5. However, as the members 5 are fixed at the second end 19 this may restrict the movement of the members 5. In such examples the first ends of the members 5 may damp the movement of the actuator 3 in the first direction. In some examples the members 5 may be arranged within the apparatus 1 so that movement of the actuator 3 in the first direction does not cause any displacement of the members 5. The restriction of the movement of the members 5 may ensure that the movement of the actuator 3 in the first direction does not cause a tactile output to be provided by the apparatus 1.

In some examples the restriction of the movement of the members 5 may ensure that the movement of the actuator 3 in the first direction is small enough so that any tactile output that is provided is very small. A very small tactile output may be one that may be perceptible to a user but may be gentle enough so that it can be easily ignored.

When the actuator 3 moves in the second direction this causes a force to be applied to the first end 15 of the members 5. The force may extend towards the second direction. The force may be applied because the actuator 3 is positioned adjacent to the plurality of members in the second direction. The force applied by the actuator 3 causes movement of one or more of the members 5 towards the second direction. As the deformable substrate 7 is deformable this movement of the one or more members 5 causes the deformation of the deformable substrate 7. This deformation provides a tactile output for the user.

In the example of Figs.1A to 1C the apparatus 1 comprises two sets of members 5 and two sets of deformable substrates 7. The different sets of members 5 and deformable substrates 7 are provided on opposing sides of the actuator 3. In this example the apparatus 1 may therefore be arranged to provide a tactile output on two different surfaces. It is to be appreciated that in other examples the apparatus 1 could comprise just one set of members 5 and one deformable substrate 3 which could be provided on just one side of the actuator 3.

In the example of Figs. 1A to 1C the plurality of members 5 extend in a direction which is parallel to, or substantially parallel to, the second direction. In other examples the plurality of members could extend in a different angle. This may enable the movement of the actuator 3 in the second direction to be translated into a tactile output at an angle different to the second direction.

In the example of Fig. 1 the apparatus 1 comprises a single actuator 3. In some examples the apparatus 1 may comprise a plurality of actuators 3. The plurality of actuators 3 could be arranged in a matrix arrangement or any other suitable arrangement. In such examples the members 5 damp the movements of the actuators in the first direction which reduces vibrational cross talk between the actuators 3. This reduction in cross talk makes it possible to increase the density of the actuators 3 and have adjacent actuators 3 positioned closer to each other while still enabling different tactile outputs to be detectable by a user. This provides for improved granularity of the tactile outputs.

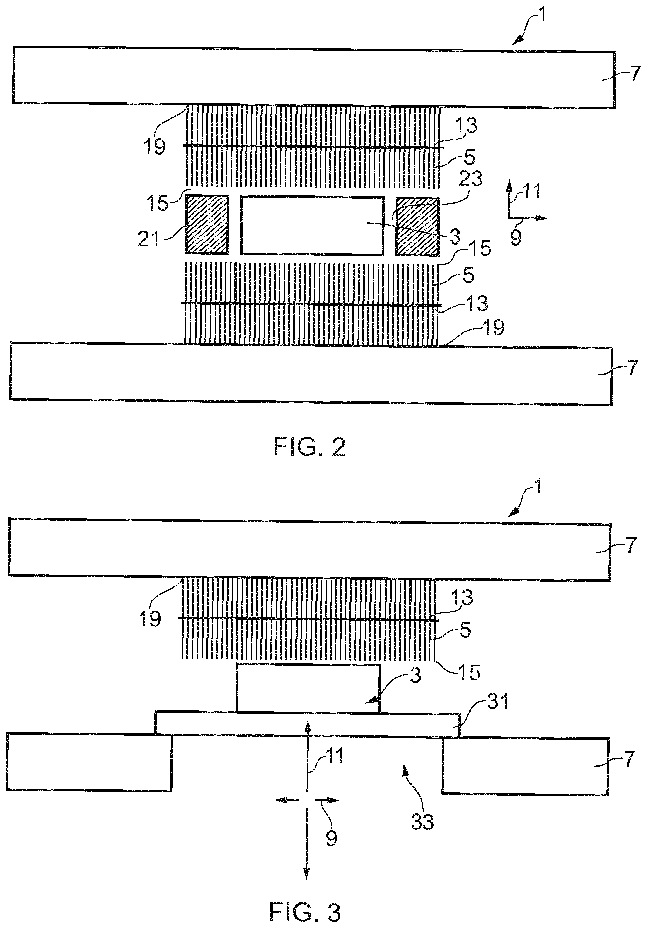

Fig. 2 illustrates another example apparatus 1 according to examples of the disclosure. In the example of Fig. 2 the apparatus 1 comprises an actuator 3, a plurality of members 5 and a deformable substrate 7. These may be as described above and corresponding reference numerals are used for corresponding features.

In the example of Fig. 2 the apparatus 1 also comprises a cavity 23 where the actuator 3 is provided within the cavity 23. In the example of Fig. 2 the cavity 23 is formed by an elastomeric member 21. The elastomeric member 21 may form an enclosing wall around the actuator 3. In some examples the elastomeric member 21 may be formed into a ring shape. Other shapes of elastomeric member 21 could be used in other examples of the disclosure.

The actuator 3 is positioned within the cavity 23. The cavity 23 and the actuator 3 are sized so that the actuator 3 fits entirely within the cavity 23. The cavity 23 is larger than the actuator 3 so that the actuator 3 can move within the cavity 3 along the first direction as indicated by arrow 9. The cavity 23 may be slightly larger than the actuator 3 to allow for small movements of the actuator 3 in the first direction. This may enable the actuator 3 to move in both the first direction and the second direction within the cavity 13. The possible movements in the first direction are smaller than the possible movements in the second direction.

The elastomeric member 21 provides a wall of the cavity 23 which is positioned adjacent to the actuator 3 in the first direction. This restricts the movement of the actuator 3 in the first direction. This allows the actuator 3 to move up to the walls in the first direction but restricts further motion in that direction.

In the example of Fig. 2 the cavity does not have any walls overlaying or underlying the actuator 3. This allows the actuator 3 to move in the second direction. The plurality of members 5 are provided overlaying and underlying the cavity 23 so that when the actuator 3 moves in the second direction this causes displacement of one or more of the plurality of members 5.

The cavity 23 therefore restricts the movement of the apparatus 1 in the first direction but enables the actuator 3 to move freely in the second direction and so enables the plurality of members 5 to be used to provide a tactile output to a user.

In the example of Fig. 2 the actuator 3 is provided within the cavity 23. In other examples of the disclosure other components of the apparatus 1 could also be provided within the cavity 23. For example, the plurality of members 5, or at least part of the plurality of members 5 could also be provided within the cavity 23.

Fig. 3 illustrates another example apparatus 1 according to examples of the disclosure. In the example of Fig. 3 the apparatus 1 comprises an actuator 3, a plurality of members 5 and a deformable substrate 7. These may be as described above and corresponding reference numerals are used for corresponding features.

In the example of Fig. 3 the apparatus 1 comprises a structured membrane 31. The structured membrane 31 may be a deformable membrane or an at least partially deformable membrane. This may enable the structured membrane 31, or at least parts of the structured membrane 31 to move.

The structured membrane 31 may be structured so as to provide localized elasticity. The membrane 31 may comprise any suitable structures. The structures may comprise a three dimensional pattern on the surface of the membrane 31 which adjusts the elasticity of the membrane 31. In some examples the structures could be arranged in a zig-zag pattern. Other arrangements and types of structures could be used in other examples of the disclosure.

In the example of Fig. 3 the structured membrane 31 is mounted over a discontinuity 33 in the deformable substrate 7. The structured membrane 31 is arranged over the discontinuity 33 so that the edges of the structured membrane 33 are fixed to the deformable substrate 7 around the edge of the discontinuity 33. This prevents the edges of the structured membrane 31 from moving relative to the deformable substrate 7. This may prevent movement of the structured membrane 31 in the first direction. The discontinuity 33 provides a gap within the deformable substrate 7 which the structured membrane 31 can move into. This therefore enables movement of the structured membrane 31 in the second direction.

In the example of Fig. 3 the actuator 3 is mounted on the structured membrane 31. The actuator 3 may be mounted on the structured membrane 31 so that the structured membrane 31 bears the weight, or at least part of the weight, of the actuator. The actuator 3 is mounted on the structured membrane 31 so that movement of the actuator 3 causes movement of, at least part of, the structured membrane 31.

The plurality of members 5 are provided overlaying the actuator 3. The plurality of members 5 are provided on the opposing side of the actuator 3 to the structured membrane 31. This enables movement of the structured membrane 31 in the second direction to cause the displacement of the plurality of members 5 in the second direction.

When the actuator 3 moves in the first direction this does not cause any displacement of the structured membrane 31 as the structured membrane 31 is fixed in position in the first direction. However, when the actuator 3 moves in the second direction this causes movement of the structured membrane 31 in the second direction. This may cause the structured membrane 31 to move in and out of the discontinuity 33 of the deformable substrate 7. This also causes displacement of the plurality of members 5 which therefore provides a tactile output for the user. Therefore the apparatus 1 provides a tactile output when the actuator 3 is moving in the second direction but not when the actuator 3 is moving in the first direction.

In some examples the frequency of the structured membrane 31 may be tuned to a resonant frequency of the actuator 3. This may enable the movement of the actuator 3 to be enhanced so as to provide a larger tactile output for the user. The frequency of the structured membrane 31 may be tuned using any suitable means. In some examples the structures on the membrane 31 may be used to tune the structured membrane 31. For example the thickness and spacing of the zig-zag structures could be used to tune the membrane.

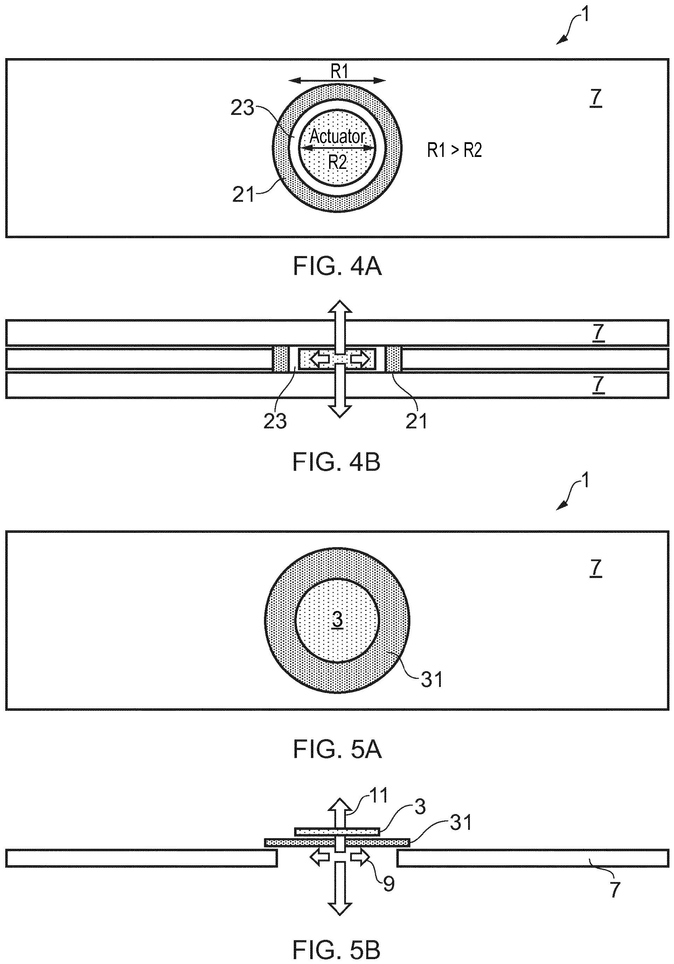

Figs. 4A and 4B illustrate another apparatus 1 according to examples of the disclosure. Fig. 4A illustrates a plan view of a part of the apparatus 1 and Fig. 4B illustrates a cross section of the apparatus 1. The example apparatus 1 comprises an actuator 3, a cavity 23, an elastomeric member 21, and two deformable substrates 7.

In the example of Fig. 2 the apparatus 1 also comprises a cavity 23 where the actuator 3 is provided within the cavity 23. In the example of Fig. 2 the cavity 23 is formed by an elastomeric member 21. The elastomeric member 21 may form an enclosing wall around the actuator 3. In some examples the elastomeric member 21 may be formed into a ring shape. Other shapes of elastomeric member 21 could be used in other examples of the disclosure.

The apparatus 1 is arranged so that the actuator 3 is positioned within the cavity 23. The cavity 23 and the actuator 3 are sized so that the actuator 3 fits entirely within the cavity 23. In the examples of Figs. 4A and 4B the cavity 23 has a diameter R1 and the actuator 3 has a diameter R2 where R2 is smaller than R1. This leaves a gap between the edges of the actuator 3 and the walls of the cavity 23. The cavity 23 is larger than the actuator 3 so that the actuator 3 can move within the cavity 3. This may enable the actuator 3 to move in both the first direction and the second direction within the cavity 23.

The elastomeric member 21 provides a wall of the cavity 23 which is positioned adjacent to the actuator 3 in the first direction. This restricts the movement of the actuator 3 in the first direction. This allows the actuator 3 to move up to the walls in the first direction but restricts further motion in that direction.

In the example of Fig. 2 the cavity does not have any walls overlaying or underlying the actuator 3. This allows the actuator 3 to move in the second direction. The plurality of members 5 are provided overlaying and underlying the cavity 23 so that when the actuator 3 moves in the second direction this causes displacement of the deformable substrates 7 overlaying the cavity 23.

The cavity 23 therefore restricts the movement of the apparatus 1 in the first direction but enables the actuator 3 to move freely in the second direction and so enables the deformable substrates 7 to be deformed so as to provide a tactile output to a user.

Figs. 5A and 5B illustrate another apparatus 1 according to examples of the disclosure. Fig. 5A illustrates a plan view of a part of the apparatus 1 and Fig. 5B illustrates a cross section of the apparatus 1. The example apparatus 1 comprises an actuator 3, a structured membrane 31 and a deformable substrate 7.

The structured membrane 31 is mounted over a discontinuity 33 in the deformable substrate 7. The structure membrane 31 is arranged so that the edges of the structured membrane are fixed to the deformable substrate around the edge of the discontinuity 33. The discontinuity provides a gap within the deformable substrate 7 which the structured membrane 31 can move into.

In the example of 5A and 5B the apparatus 1 comprises a structured membrane 31. The structured membrane 31 may be a deformable membrane or an at least partially deformable membrane. This may enable the structured membrane 31, or at least parts of the structured membrane 31 to move.

The structured membrane 31 may be structured so as to provide localized elasticity. The membrane 31 may comprise any suitable structures. The structures may comprise a three dimensional pattern on the surface of the membrane 31 which adjusts the elasticity of the membrane 31. In some examples the structures could be arranged in a zig-zag pattern. Other arrangements and types of structures could be used in other examples of the disclosure.

In the example of 5A and 5B the structured membrane 31 is mounted over a discontinuity 33 in the deformable substrate 7. The structured membrane 31 is arranged over the discontinuity 33 so that the edges of the structured membrane 33 are fixed to the deformable substrate 7 around the edge of the discontinuity 33. This prevents the edges of the structured membrane 31 from moving relative to the deformable substrate 7. This may prevent movement of the structured membrane 31 in the first direction. The discontinuity 33 provides a gap within the deformable substrate 7 which the structured membrane 31 can move into. This therefore enables movement of the structured membrane 31 in the second direction.

In the example of 5A and 5B the actuator 3 is mounted on the structured membrane 31. The actuator 3 may be mounted on the structured membrane 31 so that the structured membrane 31 bears the weight, or at least part of the weight, of the actuator. The actuator 3 is mounted on the structured membrane 31 so that movement of the actuator 3 causes movement of, at least part of, the structured membrane 31.

When the actuator 3 moves in the first direction this does not cause any displacement of the structured membrane 31 as the structured membrane 31 is fixed in position in the first direction. However, when the actuator 3 moves in the second direction this causes movement of the structured membrane 31 in the second direction. This may cause the structured membrane 31 to move in and out of the discontinuity 33 of the deformable substrate 7. This also causes displacement of the plurality of members 5 which therefore provides a tactile output for the user. Therefore the apparatus 1 provides a tactile output when the actuator 3 is moving in the second direction but not when the actuator 3 is moving in the first direction.

In some examples the frequency of the structured membrane 31 may be tuned to a resonant frequency of the actuator 3. This may enable the movement of the actuator 3 to be enhanced so as to provide a larger tactile output for the user. The frequency of the structured membrane 31 may be tuned using any suitable means. In some examples the structures on the membrane 31 may be used to tune the structured membrane 31. For example the thickness and spacing of the zig-zag structures could be used to tune the membrane.

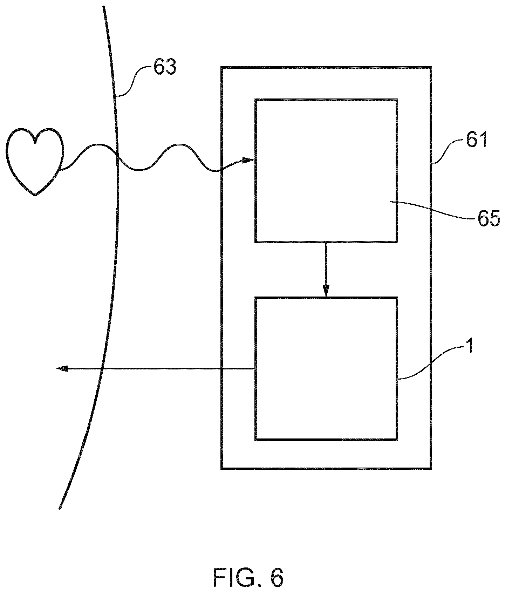

Fig. 6 schematically illustrates an example wearable device 61 which may comprise one or more apparatus 1 as described above.

The wearable device 61 is arranged to be coupled to a user's body 63. The wearable device 61 can be arranged to be coupled to the user's body 63 via any suitable means. The wearable device 61 is arranged to be coupled to a user's body so that the user can feel the deformations of the deformable substrate 7 or other parts of the apparatus 1. This may require the wearable device 61 to be coupled to the user's body 63 so that the apparatus 1 is in close proximity to the user's skin.

The wearable device 61 may comprise means for enabling the wearable device 61 to be coupled to the user's body 63. The means for coupling the wearable device 61 to the user's body 63 could comprise a necklace or lanyard which could be worn around the neck of the user. In some examples the means for coupling the wearable device 61 to the user's body 63 could comprise an item of clothing such as a shirt into which the apparatus 1 and other components of the wearable device 61 could be integrated. In some examples the means for coupling the wearable device 61 to the user's body 63 could comprise a strap or a sleeve which could be attached to a user's torso or any other suitable part of the user's body 63.

The wearable device 61 comprises one or more sensors 65. The sensors may 65 may comprise means for detecting a biosignal from the user's body 63 and converting the biosignal into an electrical output. The sensors 65 may be arranged to detect any suitable biosignal. The biosignal that is sensed by the sensors 65 could be any signal that is generated by the user's body 63. In some examples the biosignal may comprise an autonomic signal which may be controlled subconsciously by the user. The biosignal may comprise signals which are generated by autonomic bodily functions such as the user's heartbeat. In some examples the biosignal could comprise a bioelectrical signal such as a biopotential signal.

The one or more sensors 65 are coupled to the apparatus 1 so that the electrical output of the sensors 65 is provided to the apparatus 1. The electrical output may be used to drive the actuator 3 and cause movement of the actuator 3. This movement is then converted to a tactile output as described above which can be sensed by the user via their sense of touch.

In the example of Fig. 6 wearable device 61 is arranged to sense a biosignal and enable an output indicative of the sensed signal to be provided to the user. This may be useful in monitoring health applications. For instance it may enable a user's heart rate or respiration rate to be monitored and provide haptic feedback to the user. It is to be appreciated that the apparatus 1 could also be used in other types of wearable devices. For instance the apparatus 1 could be provided within a wearable communication device and arranged to provide a tactile output in response to trigger events associated with the communication functions. For instance, the tactile output could be provided in response to an incoming message or telephone call.

The apparatus allow the actuators 3 to move in a first direction but do not transfer this movement to the user as a tactile output. The apparatus 1 may emphasise the movement in the second direction so as to provide an enhanced tactile output in that second direction. This minimises the spread of the tactile output in the first direction and so provides for an improved granularity of the tactile output. This may make it easier for the user to sense the tactile output. This may also reduce the energy requirements of the apparatus 1 as it reduces the energy that is spread in the first direction.

In this description the term coupled means operationally coupled. It is to be appreciated that any number or combination of intervening elements may be providing, including no intervening elements.

The term "comprise" is used in this document with an inclusive not an exclusive meaning. That is any reference to X comprising Y indicates that X may comprise only one Y or may comprise more than one Y. If it is intended to use "comprise" with an exclusive meaning then it will be made clear in the context by referring to "comprising only one..." or by using "consisting".

The scope of the invention is solely defined by the appended claims.

## Claims

1. An apparatus (1) comprising:
an actuator (3) arranged to move in a first direction and a second direction in response to an electrical input signal;
a plurality of elongate members (5), adjacent to the actuator and arranged to extend towards the second direction; and
wherein the actuator is arranged relative to the plurality of elongate members so that displacement of the plurality of elongate members caused by movement of the actuator in the first direction is restricted and displacement of the plurality of elongate members caused by movement of the actuator in the second direction is adapted to provide a tactile output for a user.

2. An apparatus as claimed in claim 1 comprising at least one deformable substrate (7) wherein the plurality of elongate members are coupled to the deformable substrate so that displacement of the plurality of elongate members, caused by the movement of the actuator in the second direction, deforms the deformable substrate to provide the tactile output for a user.

3. An apparatus as claimed in claim 2 wherein the plurality of elongate members are unattached at a first end (15) and coupled to the deformable substrate at a second end (19) so that when the actuator moves in the first direction the first end of the plurality of elongate members moves towards the first direction but the second end does not move.

4. An apparatus as claimed in any preceding claim wherein the displacement of the plurality of elongate members is restricted so as to prevent a tactile output being provided to the user when the actuator moves in the first direction.

5. An apparatus as claimed in any preceding claim wherein the second direction is orthogonal to the first direction.

6. An apparatus as claimed in claim 1 wherein the plurality of elongate members are parallel to each other.

7. An apparatus as claimed in any preceding claim comprising a coupling member (13) arranged to couple the plurality of elongate members together.

8. An apparatus as claimed in any preceding claim wherein the actuator is adjacent to the plurality of elongate members so that when the actuator moves in the second direction the plurality of elongate members also moves in the second direction.

9. An apparatus as claimed in any preceding claim where the apparatus is arranged to be coupled to a user's body (63) so that the user can feel the tactile output provided by the displacement of the plurality of elongate members.

10. An apparatus as claimed in any preceding claim wherein the apparatus comprises at least one elongate member adjacent to a first side of the actuator and at least one elongate member adjacent to an opposing side of the actuator.

11. An apparatus as claimed in any preceding claim wherein the plurality of elongate members comprise an elastic material.

12. An apparatus as claimed in any preceding claim comprising a plurality of actuators arranged in a matrix arrangement.

13. An apparatus as claimed in any preceding claims wherein the apparatus comprises a cavity (23) and the actuator is provided within the cavity.

14. An apparatus as claimed in claim 13 wherein the cavity is, at least partially, formed by an elastomeric member (21).

## Patentansprüche

1. Vorrichtung (1), die Folgendes umfasst:
einen Aktuator (3), der angeordnet ist, sich in Reaktion auf ein elektrisches Eingangssignal in eine erste Richtung und eine zweite Richtung zu bewegen;
eine Vielzahl von langgestreckten Elementen (5), die dem Aktuator benachbart und angeordnet sind, sich in die zweite Richtung zu erstrecken; und
wobei der Aktuator relativ zur Vielzahl von langgestreckten Elementen derart angeordnet ist, dass ein Versatz der Vielzahl von langgestreckten Elementen, der durch eine Bewegung des Aktuators in die erste Richtung bewirkt wird, beschränkt ist und ein Versatz der Vielzahl von langgestreckten Elementen, der durch eine Bewegung des Aktuators in die zweite Richtung bewirkt wird, angepasst ist, eine taktile Ausgabe für einen Benutzer bereitzustellen.

2. Vorrichtung nach Anspruch 1, die mindestens ein verformbares Substrat (7) umfasst, wobei die Vielzahl von langgestreckten Elementen derart an das verformbare Substrat gekoppelt sind, dass ein Versatz der Vielzahl von langgestreckten Elementen, der durch die Bewegung des Aktuators in die zweite Richtung bewirkt wird, das verformbare Substrat verformt, um die taktile Ausgabe für einen Benutzer bereitzustellen.

3. Vorrichtung nach Anspruch 2, wobei die Vielzahl von langgestreckten Elementen an einem ersten Ende (15) unbefestigt und an einem zweiten Ende (19) an das verformbare Substrat gekoppelt sind, derart, dass, wenn sich der Aktuator in die erste Richtung bewegt, das erste Ende der Vielzahl von langgestreckten Elementen sich in die erste Richtung bewegt, das zweite Ende sich aber nicht bewegt.

4. Vorrichtung nach einem der vorhergehenden Ansprüche, wobei der Versatz der Vielzahl von langgestreckten Elementen beschränkt ist, um zu verhindern, dass eine taktile Ausgabe für den Benutzer bereitgestellt wird, wenn sich der Aktuator in die erste Richtung bewegt.

5. Vorrichtung nach einem der vorhergehenden Ansprüche, wobei die zweite Richtung orthogonal zur ersten Richtung verläuft.

6. Vorrichtung nach Anspruch 1, wobei die Vielzahl von langgestreckten Elementen parallel zueinander verlaufen.

7. Vorrichtung nach einem der vorhergehenden Ansprüche, die ein Kopplungselement (13) umfasst, das angeordnet ist, die Vielzahl von langgestreckten Elementen zusammenzukoppeln.

8. Vorrichtung nach einem der vorhergehenden Ansprüche, wobei der Aktuator der Vielzahl von langgestreckten Elementen benachbart ist, derart, dass, wenn sich der Aktuator in die zweite Richtung bewegt, die Vielzahl von langgestreckten Elementen sich ebenfalls in die zweite Richtung bewegt.

9. Vorrichtung nach einem der vorhergehenden Ansprüche, wobei die Vorrichtung angeordnet ist, an einen Körper (63) eines Benutzers gekoppelt zu werden, derart, dass der Benutzer die taktile Ausgabe, die durch den Versatz der Vielzahl von langgestreckten Elementen bereitgestellt wird, fühlen kann.

10. Vorrichtung nach einem der vorhergehenden Ansprüche, wobei die Vorrichtung mindestens ein langgestrecktes Element, das einer ersten Seite des Aktuators benachbart ist, und mindestens ein langgestrecktes Element, das einer gegenüberliegenden Seite des Aktuators benachbart ist, umfasst.

11. Vorrichtung nach einem der vorhergehenden Ansprüche, wobei die Vielzahl von langgestreckten Elementen ein elastisches Material umfassen.

12. Vorrichtung nach einem der vorhergehenden Ansprüche, die eine Vielzahl von Aktuatoren umfasst, die in einer Matrixanordnung angeordnet sind.

13. Vorrichtung nach einem der vorhergehenden Ansprüche, wobei die Vorrichtung einen Hohlraum (23) umfasst und der Aktuator in dem Hohlraum bereitgestellt ist.

14. Vorrichtung nach Anspruch 13, wobei der Hohlraum mindestens teilweise durch ein elastomerisches Element (21) gebildet wird.

## Revendications

1. Appareil (1) comprenant :
un actionneur (3) agencé pour se déplacer dans une première direction et une seconde direction en réponse à un signal d'entrée électrique ;
une pluralité d'éléments allongés (5) adjacents à l'actionneur et agencés pour s'étendre vers la seconde direction ; et
dans lequel l'actionneur est agencé par rapport à la pluralité d'éléments allongés de sorte que le déplacement de la pluralité d'éléments allongés provoqué par le mouvement de l'actionneur dans la première direction est limité et le déplacement de la pluralité d'éléments allongés provoqué par l'actionneur dans la seconde direction est adapté pour fournir une sortie tactile pour un utilisateur.

2. Appareil selon la revendication 1, comprenant au moins un substrat déformable (7), dans lequel la pluralité d'éléments allongés sont couplés au substrat déformable de sorte que le déplacement de la pluralité d'éléments allongés, provoqué par le mouvement de l'actionneur dans la seconde direction, déforme le substrat déformable pour fournir la sortie tactile pour un utilisateur.

3. Appareil selon la revendication 2, dans lequel la pluralité d'éléments allongés ne sont pas fixés au niveau d'une première extrémité (15) et sont couplés au substrat déformable au niveau d'une seconde extrémité (19) de sorte que lorsque l'actionneur se déplace dans la première direction, la première extrémité de la pluralité d'éléments allongés se déplace vers la première direction mais la seconde extrémité ne se déplace pas.

4. Appareil selon l'une quelconque des revendications précédentes, dans lequel le déplacement de la pluralité d'éléments allongés est limité afin d'empêcher la fourniture d'une sortie tactile à l'utilisateur lorsque l'actionneur se déplace dans la première direction.

5. Appareil selon l'une quelconque des revendications précédentes, dans lequel la seconde direction est orthogonale à la première direction.

6. Appareil selon la revendication 1, dans lequel la pluralité d'éléments allongés sont parallèles entre eux.

7. Appareil selon l'une quelconque des revendications précédentes, comprenant un élément de couplage (13) agencé pour coupler la pluralité d'éléments allongés ensemble.

8. Appareil selon l'une quelconque des revendications précédentes, dans lequel l'actionneur est adjacent à la pluralité d'éléments allongés de sorte que lorsque l'actionneur se déplace dans la seconde direction, la pluralité d'éléments allongés se déplace également dans la seconde direction.

9. Appareil selon l'une quelconque des revendications précédentes, dans lequel l'appareil est agencé pour être couplé au corps (63) d'un utilisateur, de sorte que l'utilisateur peut ressentir la sortie tactile fournie par le déplacement de la pluralité d'éléments allongés.

10. Appareil selon l'une quelconque des revendications précédentes, dans lequel l'appareil comprend au moins un élément allongé adjacent à un premier côté de l'actionneur et au moins un élément allongé adjacent à un côté opposé de l'actionneur.

11. Appareil selon l'une quelconque des revendications précédentes, dans lequel la pluralité d'éléments allongés comprend un matériau élastique.

12. Appareil selon l'une quelconque des revendications précédentes, comprenant une pluralité d'actionneurs agencés selon un agencement matriciel.

13. Appareil selon l'une quelconque des revendications précédentes, dans lequel l'appareil comprend une cavité (23) et l'actionneur est prévu à l'intérieur de la cavité.

14. Appareil selon la revendication 13, dans lequel la cavité est au moins partiellement formée avec un élément élastomère (21).
